# FASCICULE DE BREVET EUROPEEN

(11) **EP 3 315 857 B1**
(45) Date de publication et mention de la délivrance du brevet: **28.06.2023**
(21) Numéro de dépôt: 17196690.6
(22) Date de dépôt: 16.10.2017
(51) Int. Cl.: F21V 8/00, B60Q 3/64, B60Q 3/12

(54) **GUIDE DE LUMIÈRE COUDÉ AMÉLIORÉ**
VERBESSERTER GEBOGENER LICHTWELLENLEITER
IMPROVED ANGLED LIGHT GUIDE

(30) Priorité: 28.10.2016 FR 1660528
(43) Date de publication de la demande: 02.05.2018
(73) Titulaire: Valeo Vision, 93012 Bobigny Cedex (FR)
(72) Inventeur: LETOUMELIN, Rémi, 93012 BOBIGNY Cedex (FR); TASSY, Pierre-Louis, 93012 BOBIGNY Cedex (FR)
(74) Mandataire: Valeo Visibility

(56) Documents cités:
- EP-A1- 2 500 753
- EP-A1- 2 669 721
- EP-A1- 2 990 720
- EP-A1- 3 084 292
- EP-A1- 3 118 060
- EP-A1- 3 208 525
- WO-A1-2016/114336
- US-A1- 2001 019 488
- US-A1- 2015 023 047
- US-B2- 9 452 704

## Description

L'invention se rapporte au domaine des guides de lumière, notamment des guides de lumière utilisés dans l'éclairage d'intérieur des véhicules automobiles.

Afin d'améliorer l'éclairage des habitacles de véhicules automobiles, il est connu de doter certains équipements de l'habitacle de dispositifs d'émission lumineuse.

L'une des tendances actuelles pour ce faire repose sur l'emploi de guides de lumières connectés optiquement à une source de lumière par l'une de leur extrémités, et de simultanément faire se propager la lumière au sein du guide de lumière et d'en faire rayonner une partie dans une direction choisie de façon à générer une surface lumineuse apparente de grandes dimensions, par exemple pour rétroéclairer une surface choisie.

Ceci permet d'obtenir une luminosité importante à moindre coût, tout limitant la consommation d'énergie électrique associée relativement à des dispositifs lumineux plus classiques, par exemple à ampoules.

Par exemple, les documents US20150023047A1 et US2001019488A1 divulguent des guides de lumière ramifiés où une branche commune reçoit de la lumière, celle-ci se propageant ensuite le long et jusqu' au bout de ramifications menant chacune à un système optique utilisant cette lumière.

Les documents EP 2 500 753 A1, WO 2016/114336 A1, EP 3 084 292 A1, EP 2 669 721 A1, US 9 452 704 B2, EP 3 208 525 A1, EP 3 118 060 A1 et EP 2 990 720 A1 divulguent des guides de lumière.

Toutefois, ce type de dispositifs à guide de lumière peut être sujet à certaines contraintes qui tendent à en diminuer l'efficacité et à dégrader l'apparence générale du rendu lumineux obtenu.

En effet, l'espace allouable à ces dispositifs est généralement lui-même fortement contraint. Ceci tend à se traduire par une configuration spatiale des guides de lumière dans laquelle les guides présentent une portion inadaptée pour rayonner dans la direction souhaitée, telle que par exemple une portion d'entrée connectant optiquement une source de lumière injectant de la lumière dans le guide et une portion de sortie du guide par laquelle la lumière est rayonnée.

Or la présence de cette portion inadaptée pour rayonner dans la direction souhaitée se traduit par la présence de zones sombres indésirables au sein de la surface lumineuse résultante.

Aussi, l'invention vise à améliorer la situation.

A cet effet, l'invention concerne un guide de lumière selon la revendication 1.

Le guidage de la lumière au sein du guide repose avantageusement sur des réflexions internes totales de la lumière sur les surfaces internes du guide.

En outre, la portion d'entrée comprend avantageusement une première sous-portion d'injection et une deuxième sous-portion de connexion connectées optiquement l'une à l'autre.

Par ailleurs, les portions d'entrée et de sortie sont avantageusement consécutives.

En outre, la portion de sortie est avantageusement pourvue d'un ou plusieurs éléments de découplage, le ou chaque élément de découplage étant agencé pour découpler hors du guide de la lumière incidente sur cet élément de découplage.

Selon un aspect de l'invention, la portion d'entrée présente une forme générale coudée à 90°, ou présente une sous-portion présentant une forme générale coudée à 90°.

Selon un aspect de l'invention, la portion de sortie est configurée pour rayonner de la lumière selon au moins une direction générale d'émission privilégiée, l'élément optique étant configuré pour émettre de la lumière selon une direction d'émission privilégiée parallèle à ladite direction générale d'émission privilégiée.

Selon un aspect de l'invention, l'élément optique est agencé sur la portion d'entrée à un emplacement adapté pour que la lumière issue de la source de lumière qui pénètre dans l'élément optique subisse au moins une réflexion au sein du guide de lumière.

Selon un aspect de l'invention, l'élément optique présente une face de réflexion configurée pour réfléchir au moins une partie de la lumière pénétrant dans l'élément optique.

Selon un aspect de l'invention, la face de réflexion est courbée.

Selon un aspect de l'invention, la face de réflexion présente une forme générale de portion de surface externe de tore.

Selon un aspect de l'invention, l'élément optique présente une embase de forme générale prismatique droite ou tronconique comportant une portion conformée pour présenter une forme complémentaire d'une surface de la portion d'entrée au niveau de laquelle l'élément optique est agencé.

Selon un aspect de l'invention, l'élément optique est réalisé à partir d'un matériau ayant un indice optique sensiblement identique à un indice optique de la portion d'entrée.

Selon un aspect de l'invention, l'élément optique est venu de matière avec la portion d'entrée.

Selon un aspect de l'invention, l'élément optique est fixé à la portion d'entrée.

Selon un aspect de l'invention, la portion de sortie comprend des moyens de déviation configurés pour découpler une partie de la lumière se propageant dans la portion de sortie pour le rayonnement de ladite portion de sortie.

Avantageusement, les moyens de déviation comprennent des éléments de découplage configurés pour découpler au moins une partie de la lumière se propageant dans la portion principale jusqu'à eux hors de la portion principale. Chaque élément de découplage de la portion de sortie est agencé pour découpler de la lumière de façon à respectivement former sur une surface à éclairer une zone éclairée ayant une largeur donnée le long de la portion de sortie, les éléments de découplage étant agencés pour que les zones éclairées soient jointives et/ou se recouvrent entre elles.

Avantageusement, l'élément optique est en outre agencé pour découpler de la lumière de façon à former sur cette surface une zone éclairée de largeur supérieure à celles des éléments de découplage.

L'invention concerne en outre un module d'éclairage de l'intérieur de l'habitacle d'un véhicule automobile, le module d'éclairage comprenant :
- un guide de lumière tel que défini ci-dessus, et
- une source de lumière couplée optiquement à la portion d'entrée du guide de lumière.

L'invention concerne également une planche de bord, notamment de véhicule automobile, la planche de bord comprenant une cavité, une surface et un module d'éclairage tel que défini ci-dessus agencé au moins en partie dans la cavité et configuré pour éclairer ladite surface.

La cavité autorise le rétroéclairage de la surface par le module d'éclairage. Par exemple, à cet effetn elle est ouverte en direction de la surface.

La cavité peut être délimitée par une cloison avant configurée pour former un panneau de masquage masquant les éléments du module d'éclairage situés dans la cavité pour une personne se situant dans l'habitacle.

L'invention sera mieux comprise à la lecture de la description détaillée qui va suivre, donnée uniquement à titre d'exemple et faite en référence aux Figures annexées, sur lesquelles :
- La Figure 1 est une illustration schématique d'une planche de bord selon l'invention ;
- La Figure 2 illustre un module d'éclairage de la planche de bord de la Figure 1 ;
- La Figure 3 illustre un guide de lumière du module d'éclairage de la Figure 2 ;
- La Figure 4 illustre une vue en coupe transversale d'une portion de sortie du guide de lumière de la Figure 3 ;
- La Figure 5 illustre une vue en coupe d'un élément optique et de la portion de sortie de la Figure 4 ;
- La Figure 6 illustre l'élément optique de la Figure 5.

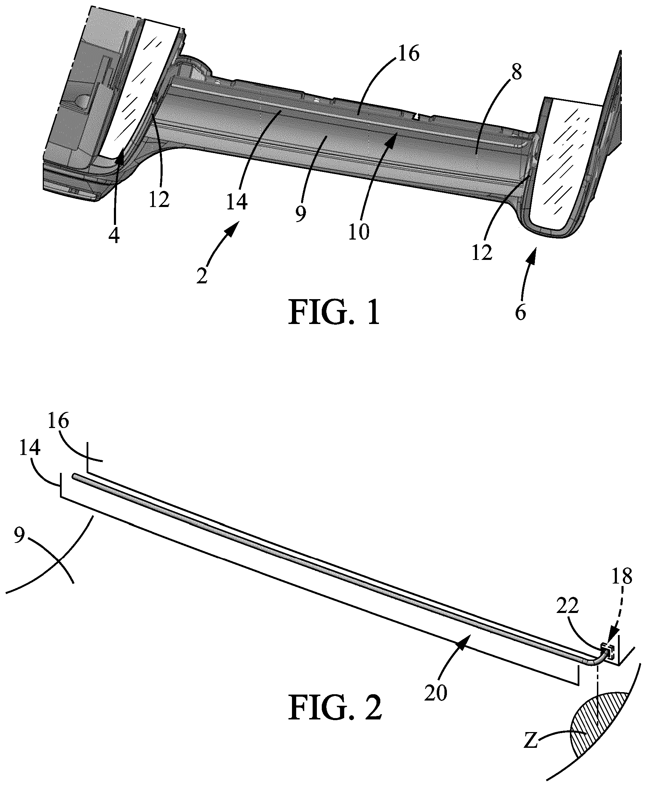

La Figure 1 illustre une planche de bord 2 selon l'invention, ci-après planche 2.

La planche 2 est destinée à être agencée dans un habitacle de véhicule automobile. La planche 2 définit un support dans, sur ou à travers lequel des équipements du véhicule sont destinés à être agencés.

En particulier, la planche 2 comprend deux orifices d'aération 4, 6 formant une entrée et/ou une sortie d'air via lequel l'habitacle communique fluidiquement avec l'extérieur du véhicule et/ou avec un équipement d'aération du véhicule.

En outre, la planche 2 comprend une cavité 8, une surface 9 destinée à être éclairée et un module d'éclairage 10 agencé dans la cavité 8.

La cavité 8 est configurée pour recevoir le module d'éclairage 10 en tout ou partie.

La cavité 8 surplombe la surface 9. En outre, la cavité 8 est ouverte en direction de la surface 9. De la sorte, elle autorise le rétroéclairage de la surface 9 par le module d'éclairage 10, comme décrit plus en détail ci-après.

La cavité 8 est délimitée latéralement par deux parois 12 formant également des parois des orifices d'aération 4, 6. En outre, elle est délimitée dans le sens de la profondeur par une cloison avant 14 et une cloison arrière 16 (Figures 1 et 2).

La cloison avant 14 est configurée pour former un panneau de masquage masquant les éléments du module d'éclairage 10 situés dans la cavité pour une personne se situant dans l'habitacle. La cloison arrière 16 est configurée pour former un support sur lequel tout ou partie du module d'éclairage 10 est fixé. Avantageusement, la cloison arrière 16 est en outre configurée pour masquer des équipements de l'habitacle agencés derrière elle, tels que des éléments de connectique.

Les cloisons 14 et 16 sont par exemple agencées sensiblement verticalement (au sens de l'orientation du véhicule). Elles sont par exemple agencées sensiblement parallèlement l'une à l'autre. En outre, elles s'étendent chacune entre les deux parois 12. Elles sont par exemple fixées par leurs extrémités latérales à ces parois 12.

Le module d'éclairage 10 est configuré pour éclairer la surface 9. Plus spécifiquement, le module d'éclairage 10 est avantageusement configuré pour éclairer la surface 9 de sorte que le rendu lumineux obtenu soit homogène spatialement sur toute la largeur de la surface 9.

En référence à la Figure 2, le module d'éclairage 10 comprend une source de lumière 18 et un guide de lumière 20, ci-après guide 20.

La source de lumière 18 est configurée pour générer de la lumière.

Par exemple, la source de lumière 18 comprend un élément photoémissif (non représenté) et un substrat 22 sur lequel l'élément photoémissif est agencé.

L'élément photoémissif est par exemple une diode électroluminescente configurée pour générer de la lumière lorsqu'elle est alimentée en énergie électrique. Par exemple, l'élément photoémissif est configuré pour générer de la lumière blanche.

Le substrat 22 est configuré pour autoriser l'alimentation de l'élément photoémissif en énergie électrique pour la génération de lumière par celui-ci. Le substrat 22 est par exemple fixé à la cloison arrière 16.

Le guide 20 est configuré pour simultanément guider de la lumière en son sein et pour rayonner cette lumière en direction de la surface 9. En particulier, il est configuré pour illuminer la surface 9 de manière homogène sur toute la largeur de la surface 9.

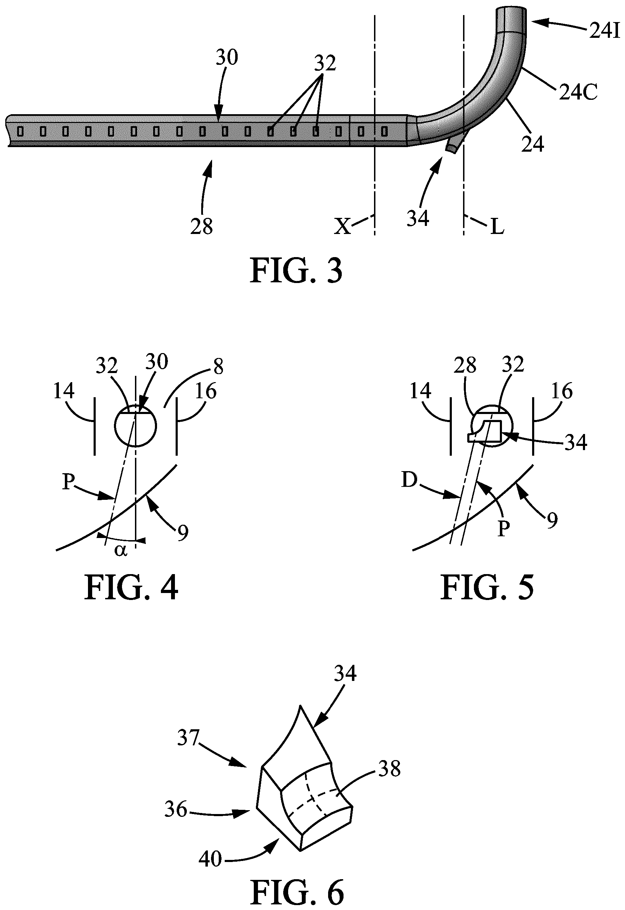

En référence aux Figures 2 et 3, le guide 20 comprend une portion d'entrée 24 et une portion de sortie 28. Les portions d'entrée 24 et de sortie 28 sont consécutives.

La portion d'entrée 24 est configurée pour coupler optiquement la source de lumière 18 à la portion de sortie 28. Autrement dit, la portion d'entrée 24 est configurée pour faire pénétrer la lumière émise par la source de lumière 18 au sein du guide 20 et pour acheminer au moins une partie de cette lumière jusqu'à la portion de sortie 28.

A cet effet, la portion d'entrée 24 est couplée optiquement à la source de lumière 18 à une de ses extrémités. Ce couplage est par exemple réalisé de manière connue, par exemple par mise en regard d'une extrémité de la portion d'entrée et de la source 18.

En outre, elle est couplée optiquement à la portion de sortie 28 par son extrémité opposée. Par exemple, à cet effet, la portion d'entrée 24 et la portion de sortie 28 sont venues de matière entre elles au niveau de cette extrémité. Alternativement, elles sont par exemple fixées l'une à l'autre.

Par ailleurs, la portion d'entrée 24 est réalisée à partir d'un matériau configuré pour permettre la propagation de la lumière en son sein par réflexion interne totale au niveau des interfaces du guide de lumière et de l'environnement extérieur.

Par exemple, la portion d'entrée 24 est réalisée à partir de Polyméthacrylate de méthyle, connu sous le sigle PMMA, ou encore à partir de Polycarbonate transparent PC.

La portion d'entrée 24 n'est pas rectiligne. Par exemple, elle est courbe.

Plus spécifiquement, elle présente une forme générale de coude. Par exemple, elle comprend une sous-portion qui présente une forme générale de coude à 90°, ou présente une telle forme elle-même. Cette forme est adaptée pour permettre une bonne connexion optique de la portion de sortie à la source de lumière tout en tenant compte des contraintes d'encombrement appliquées au module d'éclairage 10 et qui résultent de la présence des orifices d'aération 4, 6, qui proscrivent l'installation de composants du module d'éclairage 10 en leur sein.

Par exemple, la portion d'entrée 24 comprend une première sous-portion 241 d'injection et une deuxième sous-portion 24C de connexion connectées optiquement l'une à l'autre. Elles sont avantageusement venues de matière.

La première sous-portion 24I est configurée pour connecter optiquement le guide 20 à la source de lumière 18. Elle présente par exemple une forme générale cylindrique. Elle présente par exemple une dimension longitudinale faible relativement à la dimension longitudinale de la portion de sortie 28.

La deuxième sous-portion 24C est configurée pour connecter optiquement la première sous-portion 24I à la portion de sortie 28. Elle est intercalée entre celles-ci.

La deuxième sous-portion 24C présente une forme coudée. Par exemple, cette sous-portion présente une forme de coude à 90°.

Préférentiellement, ces deux sous-portions sont réalisées à partir d'un même matériau.

Toujours en référence aux Figures 2 et 3, la portion de sortie 28 est configurée pour simultanément guider en son sein la lumière qui lui parvient de la portion d'entrée, et pour émettre au moins une partie de cette lumière en direction de la surface 9. Cette émission résulte ici d'une déviation, ou découplage, de la lumière se propageant en son sein, comme décrit ci-après.

La portion de sortie 28 comprend une extrémité couplée optiquement à la portion d'entrée 24, et une extrémité opposée. Cette extrémité opposée est par exemple libre. Alternativement, cette extrémité est fixée directement ou indirectement à l'une des parois 12.

La portion de sortie 28 est réalisée à partir d'un matériau configuré pour permettre la propagation de la lumière en son sein et la réflexion des rayons lumineux se propageant en son sein au niveau d'au moins une partie de ses interfaces avec l'extérieur par réflexion interne totale.

Par exemple, la portion de sortie est réalisée à partir de Polyméthacrylate de méthyle, connu sous le sigle PMMA, ou encore à partir de Polycarbonate transparent PC.

La portion de sortie 28 est par exemple sensiblement rectiligne.

Avantageusement, les portions d'entrée 24 et de sortie 28 présentent des indices optiques respectifs proches l'un de l'autre. Par « indice optique proche », on entend que les indices optiques sont configurés pour que la lumière passant d'une portion à une autre ne soit pas ou que peu déviée. Avantageusement, les indices optiques respectifs de ces portions sont sensiblement identiques.

En outre, avantageusement, les portions d'entrée 24 et de sortie 28 sont venues de matière entre elles.

Toutefois, alternativement, les portions ne sont pas venues de matière entre elles et sont fixées l'une à l'autre, par exemple par collage ou surmoulage.

En référence à la Figure 4, qui illustre une vue en coupe transversale du module d'éclairage et de la portion de sortie 28, la portion de sortie 28 est configurée pour émettre de la lumière selon au moins une direction générale d'émission privilégiée P. Cette direction P est par exemple inclinée d'un angle α par rapport à la verticale (au sens de l'orientation du véhicule, qui correspond à celle de la Figure 4).

Afin qu'une partie de la lumière parcourant la portion de sortie 28 soit émise en direction de la surface 9, la portion de sortie 28 comprend des moyens de déviation 30 configurés pour dévier au moins une partie de la lumière parcourant la portion de sortie 28 en direction de la surface 9.

Dans l'exemple des Figures, les moyens de déviation 30 comprennent un ou des éléments de découplage 32 ménagés dans la surface de la portion de sortie 28. Chaque élément de découplage, encore appelé prisme de déviation ou de découplage, est agencé pour découpler hors du guide au moins une partie de la lumière incidente sur cet élément de découplage. Avantageusement, ils sont agencés dans une zone de cette surface qui est orientée sensiblement à l'écart de la surface 9. Autrement dit, ils sont agencés dans une zone de la surface de la portion de sortie 28 opposée à la surface 9.

Les éléments de découplage 32 se présentent par exemple sous la forme de reliefs de forme choisie. Les éléments de découplage 32 sont par exemple agencés en saillie par rapport à la surface de la portion 28. Alternativement, ils se présentent sous la forme de dépressions.

Les éléments de découplage 32 présentent par exemple une forme générale dentelée. Alternativement, ils présentent une forme générale de stries, ou encore de portions de surface externe de tore.

Les éléments de découplage 32 sont formés le long de la portion de sortie 28.

La configuration des éléments de découplage, notamment leur emplacement au sein de la portion de sortie 28, est choisi pour que, conjointement à l'orientation finale de la portion de sortie 28 au sein de la cavité 8, la lumière soit émise par la portion de sortie en direction de la surface 9. A cet effet, ils sont par exemple ménagés dans la portion de sortie au niveau d'une face de celle-ci opposée à la surface 9.

Avantageusement, les moyens de déviation 30 comprennent des éléments de découplage 32 sur sensiblement toute la longueur de la portion de sortie 28.

On remarque qu'avantageusement, chaque élément de découplage de la portion de sortie est agencé pour découpler de la lumière de façon à respectivement former sur la surface 9 une zone éclairée ayant une largeur donnée le long de la portion de sortie, les éléments de découplage étant agencés pour que les zones éclairées soient jointives et/ou se recouvrent entre elles.

Dans le contexte de l'invention, en référence à la Figure 3, outre les éléments précédemment décrits, le guide 20 comprend un élément optique 34.

L'élément optique 34 est configuré pour dévier, ou découpler, une partie de la lumière se propageant dans la portion d'entrée 24 en dehors du guide et en direction de la surface 9.

Avantageusement, l'élément optique est agencé pour découpler de la lumière de façon à former sur la surface 9 une zone éclairée de largeur supérieure à celles des éléments de découplage (le long de la portion de sortie).

L'élément optique 34 est agencé au niveau de la portion d'entrée. 24 L'élément optique 34 est plus spécifiquement agencé en saillie par rapport à la portion d'entrée 24. Par ailleurs, il s'étend en à l'écart de la portion d'entrée en direction de la cloison avant 14.

En référence à la Figure 5, l'élément optique 34 est avantageusement configuré pour émettre de la lumière selon une direction d'émission privilégiée D sensiblement parallèle à la direction P

En référence aux Figures 5 et 6, l'élément optique 34 présente une forme générale de plot. Il comporte une embase 36, une face de réflexion 38 et une face de sortie 40.

En référence aux Figures 3 et 6, l'embase 36 présente une portion 37 qui forme une extrémité proximale de l'élément 34 relativement à la portion d'entrée 24. Cette portion 37 est, conformée pour présenter une forme complémentaire de la portion de la surface de la portion d'entrée au niveau de laquelle l'élément optique 34 est agencé.

Outre cette portion 37, l'embase 36 présente par exemple une forme générale prismatique droite ou tronconique.

Par exemple, dans l'exemple des Figures, l'embase 36 présente une forme générale tronconique, à la portion conformée 37 près.

La face de réflexion 38 se situe dans le prolongement de l'embase 36. Plus spécifiquement, la face de réflexion 38 est ménagée au niveau de l'extrémité distale de l'embase relativement à la portion d'entrée. La surface externe de la face de réflexion 38 est orientée à l'écart de la surface 9.

La face de réflexion 38 est configurée pour réfléchir la lumière pénétrant dans l'élément optique 34 en direction de la face de sortie 40. En outre, elle est configurée pour que le faisceau de lumière ainsi issu de l'élément optique 34 éclaire une zone Z (Figure 2) de la surface 9 située à l'aplomb de la portion d'entrée 24 et que les moyens de déviation 30 ne peuvent éclairer de façon satisfaisante. En pratique, en l'absence de l'élément optique selon l'invention, cette zone Z est non éclairée, ou, du moins, présente un éclairement différent de celui du reste de la surface 9, fournissant ainsi un résultat apparent inhomogène.

A cet effet, la face de réflexion 38 est courbée.

Avantageusement, la face de réflexion 38 présente une forme générale de portion de surface externe de tore. Cette configuration géométrique a pour effet d'élargir le faisceau de lumière produit par l'élément 34 tout en permettant l'obtention d'une puissance lumineuse homogène au sein de ce faisceau. Ce faisceau est avantageusement centré sur la direction D.

La face de sortie 40 est opposée à la face de réflexion 38. La face de sortie 40 correspond par exemple à une surface inférieure de l'élément optique 34 (au sens de l'orientation du véhicule), étant entendu que cette orientation est susceptible de changer en fonction de l'application visée. La face de sortie 40 est orientée en direction de la surface 9. Avantageusement, la face de sortie 40 est sensiblement plane. Avantageusement, l'élément optique 34 est réalisé dans un matériau adapté pour que la lumière se propage en son sein en subissant des réflexions internes totales à son interface avec l'environnement extérieur. En outre, l'élément optique 34 présente avantageusement un indice optique proche de l'indice optique du matériau de la portion d'entrée 24. Ceci favorise le bon passage de la lumière entre la portion d'entrée 24 et l'élément optique 34.

Par exemple, l'élément optique 34 est réalisé en PMMA ou en PC.

En outre, l'élément optique 34 est avantageusement venu de matière avec la portion d'entrée 24. Alternativement, l'élément optique 34 n'est pas venu de matière avec la portion d'entrée. Il y est alors par exemple fixé.

Selon l'invention, et en référence à la Figure 3, l'élément optique 34 est en outre agencé sur la portion d'entrée 24 à un emplacement tel que les photons issus de la source de lumière 18 et ayant pénétré dans le guide de lumière 20 ne puissent pas pénétrer dans l'élément optique 34 sans avoir subi de réflexion au sein du guide.

Autrement dit, l'élément optique 34 se situe à un emplacement tel qu'il n'existe pas de trajet optique direct entre l'extrémité de la portion d'entrée 24 couplée à la source de lumière 18 et l'élément optique 34.

Par exemple, à cet effet, l'élément optique 34 s'étend à partir de la deuxième sous-portion 24C depuis une zone de cette sous-portion qui est plus proche de la portion de sortie 28 que de la première sous-portion 24I.

En outre, avantageusement, comme illustré sur la Figure 3, l'élément optique 34 s'étend selon une direction inclinée latéralement par rapport à un plan local L parallèle à un plan X transverse à la portion de sortie 28.

Autrement dit, l'élément optique 34 s'étend en direction de la cloison avant 14 mais est incliné latéralement relativement à une configuration dans laquelle il s'étendrait en faisant face à la cloison avant 14.

Avantageusement, l'élément optique présente une dimension longitudinale inférieure à 5 mm. Par exemple, elle est comprise entre 1 mm et 5 mm.

En outre, l'angle entre l'axe de l'élément 34 et l'axe de propagation de la lumière dans la portion de sortie 28 est avantageusement compris entre 45° et 90°.

Un procédé de fonctionnement du module d'éclairage va maintenant être décrit en référence aux Figures.

Lors d'une étape initiale, l'élément photoémissif est alimenté en énergie électrique par le substrat 22, de sorte que la source de lumière 18 émet de la lumière. Du fait de son couplage optique avec la portion d'entrée 24, au moins une partie de la lumière émise pénètre dans la portion d'entrée 24.

Une fois dans la portion d'entrée 24, la lumière se propage dans la portion d'entrée 24 en direction de la portion de sortie 28, en subissant le cas échéant une ou plusieurs réflexions totales au niveau de l'interface entre le guide 20 et l'environnement extérieur.

Une partie de la lumière qui se propage dans la portion d'entrée 24 pénètre dans l'élément optique 34. Au moins une partie de cette lumière parvient alors jusqu'à la face de réflexion 38. Elle y subit une réflexion et est alors déviée en direction de la face de sortie 40 qu'elle traverse en direction de la zone Z de la surface 9. Cette zone Z apparaît alors allumée.

Une autre partie de la lumière qui pénètre dans la portion d'entrée 24 parvient jusqu'à la portion de sortie 28. Pour chaque élément de découplage 32, une partie de la lumière qui parvient jusqu'à l'élément de découplage est déviée par l'élément de découplage 32 et est ensuite déviée par la portion de sortie en direction de la surface 9. Une autre partie de la lumière se propage le long de la portion de sortie 28, de sorte que de la lumière parvient jusqu'à chaque élément de découplage et que chaque élément de découplage dévie une partie de la lumière en direction de la surface 9.

Ainsi, la surface 9 apparaît allumée sur toute sa largeur.

Un procédé de fabrication du guide de lumière 20 va maintenant être décrit.

Dans une première réalisation dans laquelle les différents éléments du guide 20 sont venus de matière entre eux, l'intégralité du guide de lumière 20 est réalisée en une étape. Cette étape est par exemple réalisée par moulage, ou encore par usinage.

Autrement dit, les portions d'injection 24 et de sortie 28 ainsi que l'élément optique 34 sont fabriqués d'un seul tenant.

Alternativement, dans une deuxième réalisation dans laquelle au moins un des éléments du guide n'est pas venu de matière avec les autres, les éléments venus de matière entre eux et qui sont venues de matière entre eux 20 sont fabriqués lors d'une première étape, et le ou les autres éléments qui ne sont pas venus de matière avec les autres éléments du guide venus de matière entre eux sont fabriqués lors d'une deuxième étape, par exemple également par moulage.

Lors d'une troisième étape, les différents éléments sont alors assemblés entre eux, par exemple par collage ou encore par surmoulage.

L'invention présente plusieurs avantages.

En effet, la présence de l'élément optique a pour effet d'autoriser une extraction d'une partie de la lumière pénétrant dans la portion d'entrée. Ceci permet de compenser la présence d'éventuelles zones sombres au sein de la surface lumineuse, et qui résultent par exemple d'une disposition géométrique relative de la portion d'entrée et de la portion de sortie qui n'autorise pas l'emploi de moyens de déviation classiques au niveau de la portion d'entrée pour l'obtention d'un résultat satisfaisant.

En outre, l'élément optique est lui-même de facture relativement simple et peu coûteuse, de sorte que le coût global du guide n'est que faiblement impacté.

Par ailleurs, l'élément optique présente de faibles dimensions, de sorte que l'encombrement du guide de lumière n'est pas substantiellement impacté par sa présence.

De même, l'absence de trajet optique direct entre la source de lumière et l'élément optique a pour effet que la lumière résultant de la présence de l'élément optique présente un fort degré d'homogénéité avec la lumière déviée par les moyens de déviation, jusqu'auxquels la lumière issue de la source 18 ne parvient qu'après réflexion. Le rendu lumineux fournit sur la surface 9 par le module d'éclairage est donc bien homogène.

## Revendications

1. Guide de lumière pour module d'éclairage, notamment de véhicule automobile, le guide de lumière étant adapté pour guider de la lumière issue d'une source de lumière (18) en son sein et comprenant :
- une portion d'entrée (24) coudée et destinée à être couplée optiquement à ladite source de lumière pour le couplage de lumière dans le guide de lumière (20),
- une portion de sortie (28) couplée optiquement à la portion d'entrée (24) et adaptée pour découpler tout ou partie de la lumière injectée dans le guide de lumière, où la portion d'entrée comprend un élément optique configuré pour découpler une partie de la lumière passant dans la portion d'entrée, **caractérisé par** l'élément optique étant agencé sur la portion d'entrée (24) à un emplacement tel que les photons issus de la source de lumière (18) et ayant pénétré dans le guide de lumière (20) ne puissent pas pénétrer dans l'élément optique sans avoir subi de réflexion au sein du guide.

2. Guide de lumière selon la revendication 1, dans lequel la portion d'entrée (24) présente une forme générale coudée à 90°, ou présente une sous-portion (24C) présentant une forme générale coudée à 90°.

3. Guide de lumière selon la revendication 1 ou 2, dans lequel la portion de sortie (24) est configurée pour rayonner de la lumière selon au moins une direction générale (P) d'émission privilégiée, l'élément optique étant configuré pour émettre de la lumière selon une direction (D) d'émission privilégiée parallèle à ladite direction générale d'émission privilégiée.

4. Guide de lumière selon l'une quelconque des revendications précédentes, dans lequel l'élément optique (34) est agencé sur la portion d'entrée à un emplacement adapté pour que la lumière issue de la source de lumière qui pénètre dans l'élément optique subisse au moins une réflexion au sein du guide de lumière.

5. Guide de lumière selon l'une quelconque des revendications précédentes, dans lequel l'élément optique présente une face de réflexion (38) configurée pour réfléchir au moins une partie de la lumière pénétrant dans l'élément optique.

6. Guide de lumière selon la revendication 5, dans lequel la face de réflexion est courbée.

7. Guide de lumière selon la revendication 5 ou 6, dans laquelle la face de réflexion présente une forme générale de portion de surface externe de tore.

8. Guide de lumière selon l'une quelconque des revendications précédentes, dans lequel l'élément optique présente une embase de forme générale prismatique droite ou tronconique comportant une portion conformée pour présenter une forme complémentaire d'une surface de la portion d'entrée au niveau de laquelle l'élément optique est agencé.

9. Guide de lumière selon l'une quelconque des revendications précédentes, dans lequel l'élément optique est réalisé à partir d'un matériau ayant un indice optique sensiblement identique à l'indice optique de la portion d'entrée.

10. Guide de lumière selon l'une quelconque des revendications précédentes, dans lequel l'élément optique est venu de matière avec la portion d'entrée.

11. Guide de lumière selon l'une quelconque des revendications 1 à 9, dans lequel l'élément optique est fixé à la portion d'entrée.

12. Guide de lumière selon l'une quelconque des revendications précédentes, dans lequel la portion de sortie comprend des moyens de déviation configurés pour découpler une partie de la lumière se propageant dans la portion de sortie pour le rayonnement de ladite portion de sortie.

13. Guide de lumière selon la revendication 12, dans lequel les moyens de déviation (30) comprennent des éléments de découplage (32) configurés pour découpler au moins une partie de la lumière se propageant dans la portion principale jusqu'à eux hors de la portion principale, chaque élément de découplage de la portion de sortie étant agencé pour découpler de la lumière de façon à respectivement former sur une surface à éclairer une zone éclairée ayant une largeur donnée le long de la portion de sortie, les éléments de découplage étant agencés pour que les zones éclairées soient jointives et/ou se recouvrent entre elles, l'élément optique (34) étant en outre agencé pour découpler de la lumière de façon à former sur cette surface une zone éclairée de largeur supérieure à celles des éléments de découplage.

14. Module d'éclairage de l'intérieur de l'habitacle d'un véhicule automobile, le module d'éclairage comprenant :
- un guide de lumière selon l'une quelconque des revendications précédentes, et
- une source de lumière couplée optiquement à la portion d'entrée du guide de lumière.

15. Planche de bord, notamment de véhicule automobile, **caractérisée en ce qu'**elle comprend une cavité, une surface et un module d'éclairage selon la revendication 14 agencé au moins en partie dans la cavité et configuré pour éclairer ladite surface.

## Patentansprüche

1. Lichtleiter für ein Beleuchtungsmodul, insbesondere eines Kraftfahrzeugs, wobei der Lichtleiter geeignet ist, von einer Lichtquelle (18) kommendes Licht in seinem Inneren zu leiten, und Folgendes umfasst:
- einen gekrümmten Eintrittsabschnitt (24), der dazu bestimmt ist, zur Kopplung von Licht in den Lichtleiter (20) optisch mit der Lichtquelle gekoppelt zu sein,
- einen Austrittsabschnitt (28), der optisch mit dem Eintrittsabschnitt (24) gekoppelt ist und geeignet ist, das gesamte in den Lichtleiter eingespeiste Licht oder einen Teil davon auszukoppeln,
wobei der Eintrittsabschnitt ein optisches Element umfasst, das dazu ausgebildet ist, einen Teil des Lichts, das in den Eintrittsabschnitt eintritt, auszukoppeln, **dadurch gekennzeichnet, dass** das optische Element auf dem Eintrittsabschnitt (24) an einer Stelle so angeordnet ist, dass die Photonen, die von der Lichtquelle (18) kommen und in den Lichtleiter (20) eingedrungen sind, nicht in das optische Element eindringen können, ohne eine Reflexion im Inneren des Leiters erfahren zu haben.

2. Lichtleiter nach Anspruch 1, wobei der Eintrittsabschnitt (24) eine allgemein um 90° gekrümmte Form aufweist oder einen Unterabschnitt (24C) mit einer allgemein um 90° gekrümmten Form aufweist.

3. Lichtleiter nach Anspruch 1 oder 2, wobei der Austrittsabschnitt (24) dazu ausgebildet ist, Licht in wenigstens einer privilegierten allgemeinen Aussendungsrichtung (P) auszustrahlen, wobei das optische Element dazu ausgebildet ist, Licht in einer privilegierten Aussendungsrichtung (D) auszusenden, die parallel zur privilegierten allgemeinen Aussendungsrichtung verläuft.

4. Lichtleiter nach einem der vorhergehenden Ansprüche, wobei das optische Element (34) auf dem Eintrittsabschnitt an einer Stelle angeordnet ist, die dafür geeignet ist, dass das von der Lichtquelle kommende Licht, das in das optische Element eindringt, wenigstens eine Reflexion im Inneren des Lichtleiters erfährt.

5. Lichtleiter nach einem der vorhergehenden Ansprüche, wobei das optische Element eine Reflexionsfläche (38) aufweist, die dazu ausgebildet ist, wenigstens einen Teil des Licht, das in das optische Element eindringt, zu reflektieren.

6. Lichtleiter nach Anspruch 5, wobei die Reflexionsfläche gekrümmt ist.

7. Lichtleiter nach Anspruch 5 oder 6, wobei die Reflexionsfläche eine allgemeine Form eines Außenflächenabschnitts eines Torus aufweist.

8. Lichtleiter nach einem der vorhergehenden Ansprüche, wobei das optische Element einen Fuß mit einer geraden oder kegelstumpfförmigen allgemeinen Prismenform aufweist, der einen Abschnitt aufweist, der dazu ausgebildet ist, eine Form aufzuweisen, die zu einer Fläche des Eintrittsabschnitts komplementär ist, an der das optische Element angeordnet ist.

9. Lichtleiter nach einem der vorhergehenden Ansprüche, wobei das optische Element aus einem Material mit einem Brechungsindex hergestellt ist, der im Wesentlichen identisch zum Brechungsindex des Eintrittsabschnitts ist.

10. Lichtleiter nach einem der vorhergehenden Ansprüche, wobei das optische Element einstückig mit dem Eintrittsabschnitt ausgebildet ist.

11. Lichtleiter nach einem der Ansprüche 1 bis 9, wobei das optische Element am Eintrittsabschnitt befestigt ist.

12. Lichtleiter nach einem der vorhergehenden Ansprüche, wobei der Austrittsabschnitt Ablenkmittel umfasst, die dazu ausgebildet sind, einen Teil des Lichts, das sich im Austrittsabschnitt ausbreitet, zur Strahlung aus dem Austrittsabschnitt auszukoppeln.

13. Lichtleiter nach Anspruch 12, wobei die Ablenkmittel (30) Auskopplungselemente (32) umfassen, die dazu ausgebildet sind, wenigstens einen Teil des Lichts, das sich im Hauptabschnitt bis zu ihnen ausbreitet, aus den Hauptabschnitt auszukoppeln, wobei jedes Auskopplungselement des Austrittsabschnitts dafür angeordnet ist, Licht auszukoppeln, so dass jeweils auf einer zu beleuchtenden Fläche ein beleuchteter Bereich mit einer bestimmten Breite entlang des Austrittsabschnitts gebildet wird, wobei die Auskopplungselemente so angeordnet sind, dass die beleuchteten Bereiche aneinanderliegen und/oder einander überlappen, wobei das optische Element (34) ferner angeordnet ist, Licht auszukoppeln, so dass auf dieser Fläche ein beleuchteter Bereich mit einer Breite gebildet wird, die größer als jene der Auskopplungselemente ist.

14. Modul zur Beleuchtung des Inneren des Fahrzeuginnenraums eines Kraftfahrzeugs, das Beleuchtungsmodul umfassend:
- einen Lichtleiter nach einem der vorhergehenden Ansprüche, und
- eine Lichtquelle, die optisch mit dem Eintrittsabschnitt des Lichtleiters gekoppelt ist.

15. Armaturenbrett, insbesondere eines Kraftfahrzeugs, **dadurch gekennzeichnet, dass** es einen Hohlraum, eine Fläche und ein Beleuchtungsmodul nach Anspruch 14 umfasst, das wenigstens teilweise im Hohlraum angeordnet ist und dazu ausgebildet ist, die Fläche zu beleuchten.

## Claims

1. Light guide for a lighting module, notably for a motor vehicle, the light guide being designed to guide light emanating from a light source (18) within it, and comprising:
- a bent inlet portion (24) intended to be optically coupled to said light source for coupling light into the light guide (20),
- an outlet portion (28) optically coupled to the inlet portion (24) and designed to decouple all or some of the light injected into the light guide,
in which the inlet portion comprises an optical element configured to decouple part of the light passing into the inlet portion, **characterized by** the optical element being arranged on the inlet portion (24) at a location such that the photons emanating from the light source (18) and which have entered the light guide (20) cannot enter the optical element without having undergone reflection within the guide.

2. Light guide according to Claim 1, in which the inlet portion (24) has an overall shape bent at 90°, or has a sub-portion (24C) having an overall shape bent at 90°.

3. Light guide according to Claim 1 or 2, in which the outlet portion (24) is configured to radiate light in at least one favoured overall direction (P) of emission, the optical element being configured to emit light in a favoured direction (D) of emission parallel to said favoured overall direction of emission.

4. Light guide according to any one of the preceding claims, in which the optical element (34) is arranged on the inlet portion at a suitable location such that the light emanating from the light source and entering the optical element undergoes at least one reflection within the light guide.

5. Light guide according to any one of the preceding claims, in which the optical element has a reflection face (38) configured to reflect at least part of the light that enters the optical element.

6. Light guide according to Claim 5, in which the reflection face is curved.

7. Light guide according to Claim 5 or 6, in which the reflection face has the overall shape of a portion of the external surface of a torus.

8. Light guide according to any one of the preceding claims, in which the optical element has a base of right prismatic or frustoconical overall shape comprising a portion configured to exhibit a shape that complements a surface of the inlet portion at which the optical element is arranged.

9. Light guide according to any one of the preceding claims, in which the optical element is made from a material having an optical index substantially identical to the optical index of the inlet portion.

10. Light guide according to any one of the preceding claims, in which the optical element is formed as one with the inlet portion.

11. Light guide according to any one of Claims 1 to 9, in which the optical element is fixed to the inlet portion.

12. Light guide according to any one of the preceding claims, in which the outlet portion comprises deflection means configured to decouple some of the light spreading in the outlet portion for the radiation of said outlet portion.

13. Light guide according to Claim 12, in which the deflection means (30) comprise decoupling elements (32) configured to decouple at least some of the light spreading in the main portion as far as them out of the main portion, each decoupling element of the outlet portion being designed to decouple light in such a way as to respectively form on a surface that is to be illuminated an illuminated region of given width along the outlet portion, the decoupling elements being arranged in such a way that the illuminated regions are contiguous and/or overlap one another, the optical element (34) also being arranged in such a way as to decouple light so as to form on this surface an illuminated region of a width greater than the widths of the decoupling elements.

14. Lighting module for illuminating the inside of a motor vehicle interior, the lighting module comprising:
- a light guide according to any one of the preceding claims, and
- a light source optically coupled to the inlet portion of the light guide.

15. Instrument panel, notably of a motor vehicle, **characterized in that** it comprises a cavity, a surface and a lighting module according to Claim 14 arranged at least partially in the cavity and configured to illuminate said surface.
